# EUROPEAN PATENT SPECIFICATION

(11) **EP 3 880 968 B1**
(45) Date of publication and mention of the grant of the patent: **23.08.2023**
(21) Application number: 19804778.9
(22) Date of filing: 06.11.2019
(51) Int. Cl.: F04D 19/04, F04D 29/058, F16C 32/04, F16C 35/00, H02K 7/09

(54) **VACUUM PUMP**
VAKUUMPUMPE
POMPE À VIDE

(30) Priority: 13.11.2018 GB 201818459
(43) Date of publication of application: 22.09.2021
(73) Proprietor: Edwards Limited, Burgess Hill, Sussex RH15 9TW (GB)
(72) Inventor: KHOR, Eng Keen, Burgess Hill, Sussex RH15 9TW (GB); MIRZA, Ikram Murtaza, Burgess Hill, Sussex RH15 9TW (GB)
(74) Representative: Totman, Clare Elizabeth
(86) International application number: PCT/GB2019/053136
(87) International publication number: WO 2020/099830

(56) References cited:
- EP-A2- 2 933 496
- WO-A1-2006/117515
- US-A- 5 462 402

## Description

The present invention relates to a vacuum pump and in particular to a turbomolecular vacuum pump.

Known vacuum pumps comprise a housing having an inlet and an outlet, wherein a stator is connected to the housing. Within the housing a rotor is disposed and rotatably supported by bearings. The rotor comprises at least one rotor element to interact with the stator in order to convey a gaseous medium from the inlet to the outlet. In the case of a turbomolecular vacuum pump, the stator is built by a plurality of vanes interacting with rotor elements also built as vanes.

It is known to use permanent magnetic bearings in order to support the rotor. A permanent magnetic bearing comprises a first magnetic element connected to the stator and a second magnetic element connected to the rotor placed in close proximity to each other and configured to be in mutual repulsion. Thereby, the rotor is contactlessly supported avoiding any need for lubrication or grease.

In order to fit the second magnetic element to the rotor, the rotor is heated up to cause further expansion while the second magnetic element is cooled down, e.g. by liquid nitrogen to cause thermal shrinkage. Then the rotor and the second magnetic element can be put together to establish a tight interference fit. However, during operation the temperature is increased thereby expanding the rotor and the second magnetic element. Due to different materials of the rotor and the second magnetic element thermal expansion is different which could lead to a reduced interference fit. Due to increased rotational speed of modern turbomolecular vacuum pumps, hoops stress in the second magnetic element is increased. In order to avoid a damage of the second magnetic element of the permanent magnetic bearing, the interference fit must be increased. Thus, it is desirable to increase the assembly temperature difference between the second magnetic element and the rotor further. This might cause problems since usually the rotor is built from a light weight metal, such as aluminum, which can only be heated up to about 180° C without losing its stability. Heating the aluminum rotor up to higher degrees causes unwanted rapid aging of the rotor. The extent to which the interference can be achieved is limited by the liquid nitrogen cooling which is already being used to its maximum benefit.

EP 3 088 746 A1 describes a sleeve which is placed around the second magnetic element, wherein the sleeve has a thermal expansion coefficient and a Young's modulus of elasticity lower than the material of the rotor. Thus, by the increased temperature during operation, the thermal expansion is reduced thereby also reducing hoop stress during operation in the second magnetic element.

However, vacuum pumps are also exposed to harsh environment including low temperatures. Exposure to low temperatures leads to substantial thermal shrinkage of the sleeve and/or the rotor of a non-operating vacuum pump. Due to the tight interference fit between the second magnetic element and the sleeve or rotor, these low temperatures introduce high compressive stresses in the second magnetic element, which might damage or destroy the second magnetic element since the second magnetic element is made from a permanent magnetic material which is usually brittle.

EP 2 933 496 describes a vacuum pump comprising a rotor, a stator and a magnetic bearing. The magnetic bearing has a rotor-side bearing part arranged on the rotor and a stator-side bearing part arranged on the stator, wherein the rotor-side bearing part and the stator-side bearing part have opposing side surfaces. A gas-tight enclosure is provided for the rotor-side bearing part, which enclosure comprises a rotor-side protective wall covering the side surface of the rotor-side bearing part.

WO 2006/117515 describes a vacuum pump comprising a housing and a rotor supported by a bearing arrangement for rotation relative to the housing. The bearing arrangement comprises a rolling bearing and a damping member provided about the outer race of the rolling bearing. The damping member comprises a radial vibration damping component and, extending radially inwardly therefrom, an axial vibration damping component.

US 5 462 402 describes a flywheel energy storage system with integral molecular pump. It is an object of the present invention to provide a vacuum pump which can be safely withstand harsh environments.

This object is solved by a vacuum pump according to the invention as defined in the independent claim 1. Further embodiments of the invention are defined in the dependent claims 2 - 13.

In accordance with the present invention, the vacuum pump which is in particular a turbomolecular vacuum pump, comprises a stator and a rotor having at least one rotor element rotatable relatively to the stator. The rotor is supported by at least one permanent magnetic bearing having a first magnetic element connected to the stator and a second magnetic element connected to the rotor. First magnetic element and second magnetic element are placed in close proximity and are in mutual repulsion to each other. Thereby, contactless support of the rotor is achieved. Preferably, the at least one permanent magnetic bearing is positioned at an inlet side of the vacuum pump towards the lower pressures. The second magnetic element is connected to the rotor via a sleeve having a radial inner side in direct contact with the second magnetic element, and a radial outer side towards the rotor. Thereby preferably, the sleeve completely surrounds the second magnetic element.

In accordance with the present invention, the outer side of the sleeve comprises at least one groove. Additionally or alternatively, the outer side of the sleeve comprises at least one web. Thereby, a web is to be understood as a radial protrusion or rib towards the radial outer side, i.e. towards the rotor. By structuring the outer side of the sleeve with grooves and / or webs, direct transmission of compressive force to the second magnetic element is prevented. The grooves and / or webs provide flexibility that allows the sleeve to effectively act as a cushion for the second magnetic element. Thus, if the vacuum pump is not operated and placed at low temperatures, due to this cushion effect compressive stress to the second magnetic element is reduced avoiding damage of the brittle permanent magnetic material of the second magnetic element. Further, by reducing material from the outer side of the sleeve, simultaneously the effect of thermal expansion or shrinkage is reduced. Additionally, structuring the outer side of the sleeves leads to higher stability of the sleeve without the disadvantage of an increased thickness of the sleeve.

According to the present invention, the second magnetic element is fixed to the sleeve by an interference fit. Additionally, the sleeve is fixed to the rotor by an interference fit. If the outer side of the sleeve only comprises grooves, the outer side of the sleeve is in direct contact with the rotor. If the sleeve comprises at least one or more webs, the radial outermost part of the web is in direct contact with the rotor and used for the interference fit.

Preferably, the sleeve is configured to provide a lower radial thermal expansion during temperatures of operation than the surrounding rotor elements to fixedly hold the second magnetic element during operation. However, during non-operation at lower temperatures, for example below 15° C, preferably below 0° C and more preferably below -15° C, the compressive stress exerted by the sleeve to the second magnetic element is below the breaking point of the second magnetic element. Thus, due to the groove and / or web, the sleeve can be deformed upon thermal shrinkage to reduce the (radial)compressive stress on the second magnetic element.

Preferably, the outer side of the sleeve comprises a plurality of grooves. Additionally or alternatively, the outer side of the sleeve comprises a plurality of webs. Thereby, the sleeve flexibility is further enhanced tailoring the stability of the sleeve in order to avoid exceeding to the compressive strength of the second magnetic element.

Preferably, at least one and more preferably all grooves are along the circumferential direction of the sleeve. Additionally or alternatively, at least one and preferably all webs are along the circumferential direction of the sleeve. Thus, the homogeneous cushion effect along the circumferential direction of the sleeve is achieved.

Depending on material the magnets are formed from, preferably, the sleeve is made from a material with a low thermal expansion. In particular, the thermal expansion of the sleeve is below 23*10⁻⁶ K⁻¹ for Aluminium, preferably below 13*10⁻⁶ K⁻¹ for Stainless Steel more preferably below 8*10⁻⁶ K⁻¹ for Neodymium, and most preferably below 1*10⁻⁶ K⁻¹ for Titanium. Thus, by using a sleeve made from a material with a low thermal expansion, relative thermal expansion during operation is reduced reducing hoop stress in the second magnetic element while in non-operation state, at low temperature, compressive stress in the second magnetic element is also reduced.

Preferably, the width and / or depth of all grooves are identical. More preferably, the width of all grooves is identical with the width of all webs. Additionally or alternatively the depth of all grooves is identical with the depth of all webs. The width of the webs or grooves is measured in axial direction while the depth of the webs or grooves is measured in radial direction. Thereby, the geometrical shape of the grooves and shape of the webs can be tailored to achieve a sufficient sleeve flexibility to avoid damage of the second magnetic element.

Preferably, the width and / or depth of all grooves are different to each other. Additionally or alternatively, the width and / or depth of all webs are different to each other. More preferably, the width and / or depth of the grooves are different to the width and / or depth of the webs. Thereby, the geometrical shape of the grooves and shape of the webs can be tailored to achieve sufficient sleeve flexibility to avoid damage of the second magnetic element.

Preferably, the second magnetic element comprises more than one magnetic ring surrounded by the sleeve. In particular, the magnetic ring is completely surrounded by the sleeve.

Preferably, the axial position of the groove and / or web is adjusted to the position of the magnetic rings. Preferably, if the sleeve comprises more than one groove and / or web, the positions of the grooves and / or webs are adjusted to the position of the magnetic rings.

Preferably, the number of grooves and / or webs is adjusted to the number of magnetic rings. Thus, the number of grooves and / or webs can be tailored in accordance to the number of magnetic rings in order to achieve sufficient sleeve flexibility to prevent any of the magnetic rings to be damaged during non-operation at low temperatures.

Preferably, the sleeve comprises a rim at the inner side of the sleeve, wherein the rim is positioned towards the end of the rotor when mounted. The second magnetic element directly abuts against the rim in order to fix the axial position of the second magnetic element. In particular, the outermost magnetic ring abuts with the axial surface of the magnetic ring against the rim.

Preferably, at a first axial end of the sleeve a web is arranged, wherein at the opposite end of the sleeve a groove or no web is arranged. Preferably, the web at the first axial end coincides with the rim to generate a stable end of the sleeve which can be used during the process of generating the interference fit between sleeve and rotor. Preferably, the first end is the end towards the end of the rotor. Alternatively, at the first axial end of the sleeve a groove is arranged, wherein at the opposite second end of the sleeve also a groove is arranged. Alternatively, at the first axial end of the sleeve a groove is arranged, wherein at the opposite second end a web is arranged. Alternatively, at the first axial end of the sleeve a web is arranged, wherein at the opposite second end of the sleeve also a web is arranged. Thus, the position of grooves and webs at both axial ends of the sleeves can be tailored to the specific needs to provide sufficient sleeve flexibility, while maintaining sufficient stability for assembling and operation of the vacuum pump.

Preferably, the rotor is supported by a second permanent magnetic element bearing having a first magnetic element connected to the stator and a second magnetic element connected to the rotor. The second magnetic element is connected to the rotor by a second sleeve having a radial inner side in direct contact with the second magnetic element and a radial outer side towards the rotor. Thereby, the outer side of the sleeve comprises at least one groove and / or at least one web.

Preferably, the second permanent magnetic bearing can be built as previously described with respect to the first permanent magnetic bearing. In particular, the first permanent magnetic bearing and the second permanent magnetic bearing are built identical.

In the following, the invention is described with respect to a specific embodiment with reference to the accompanied drawings.

It is shown:
- Fig. 1: a schematic view of a turbomolecular pump in accordance to the present invention,

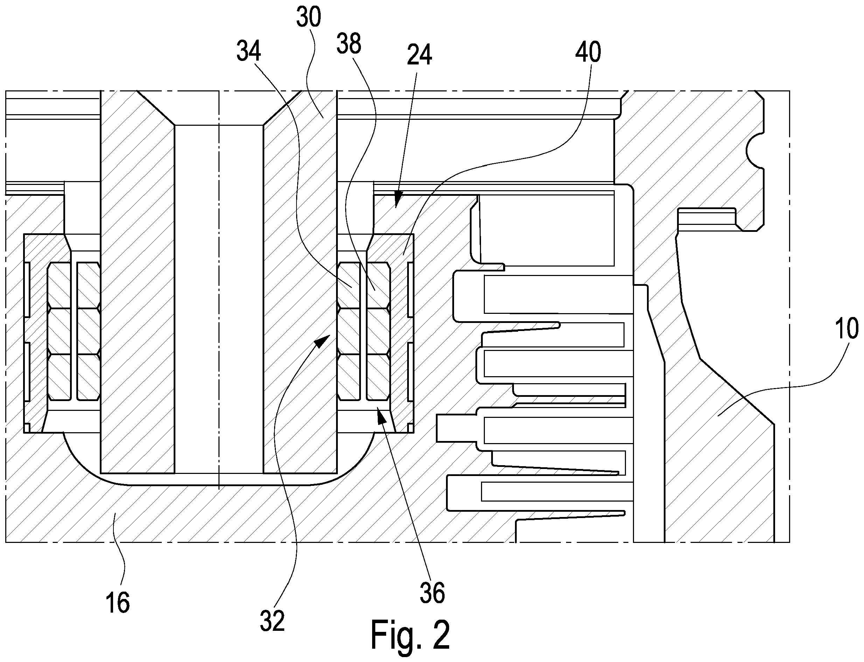

- Fig. 2: a detailed view of the permanent magnetic bearing of the vacuum pump shown in Fig. 1 and
- Fig. 3: a detailed cross-section of the sleeve as shown in Fig. 2.

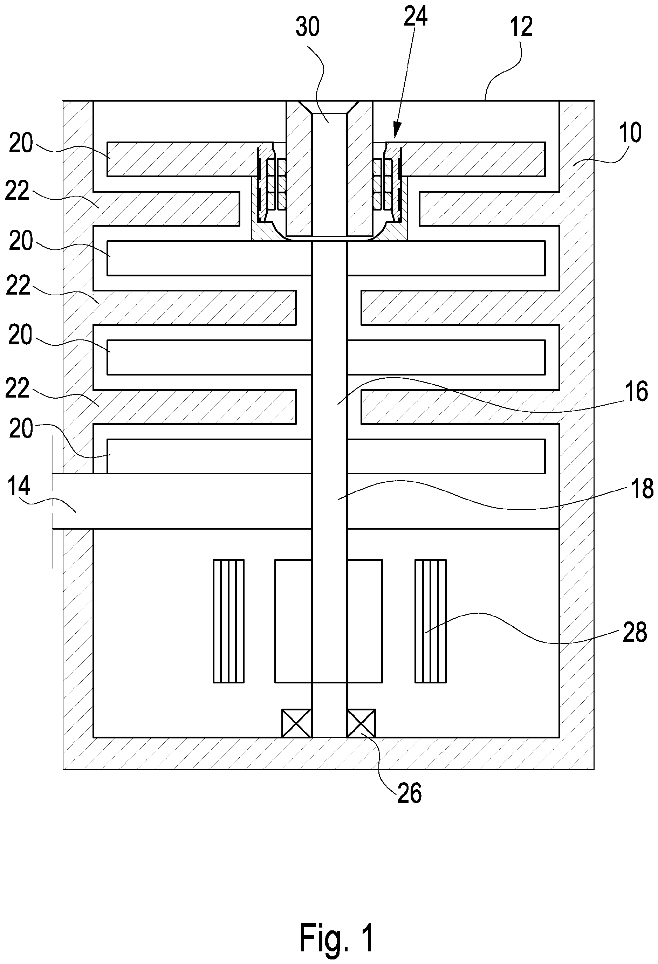

The vacuum pump in accordance to the present invention shown in Fig. 1 is a turbomolecular vacuum pump comprising a housing 10 with an inlet 12 and an outlet 14. In the housing a rotor 16 is arranged comprising a rotor shaft 18 and rotor elements 20 built as vanes. Further, the vacuum pump comprises a stator interacting with the rotor elements 20 of the rotor 16 built by vanes 22 connected to the housing 10. The rotor shaft 18 is rotatable supported within the housing 10 by a first bearing 24 built as permanent magnetic bearing, and second bearing 26 built in the embodiment of Fig. 1 as ball bearing.

The rotor 16 is rotated by an electric motor 28, thereby conveying a gaseous medium from the inlet 12 to the outlet 14.

The rotor 16 comprises a cantilevered end defining a recess, wherein the first bearing 24 is arranged within this recess. A protrusion 30 connected to the housing 10 reaches into the recess.

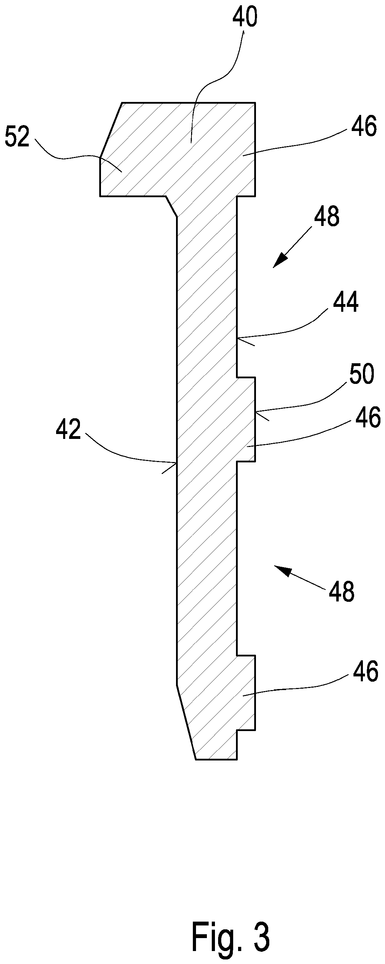

The permanent magnetic bearing 24 comprises a first magnetic element 32 which comprises several magnetic rings 34. The first magnetic element 32 is in direct contact with the protrusion 30 of the housing 10. Further, the permanent magnetic bearing 24 comprises a second magnetic element 36 comprising an equal number of magnetic rings 38 which are placed in close proximity to the magnetic rings 34 of the first magnetic element 32 and which are in mutual repulsion to each other to contactless support the rotor 16. Thereby, the second magnetic element 36 is connected to the rotor 16 via a sleeve 40. The sleeve 40 comprises an inner surface 42 and an outer surface 44, wherein the second magnetic element 36 is in direct contact with the inner surface 42. The magnetic rings 38 of the second magnetic element 36 are attached to the sleeve 40 by an interference fit. The outer surface 44 of the sleeve 40 comprises in the embodiment of Fig. 3 several webs 46 defining recesses 48 in between. The radially outermost surface 50 of the webs 46 is in the mounted state in direct contact with the rotor 16. The sleeve is attached to the rotor 16 also by an interference fit.

Due to the webs 46 and the formed recesses 48, the compressive stress on the second magnetic element 36 upon thermal shrinkage at lower temperatures is reduced due to a cushion effect provided by the sleeve flexibility. At the position of the recesses 48, the material thickness of the sleeve 40 is reduced reducing the force generated by the thermal shrinkage which is transferred to the magnetic rings 38 of the second magnetic element 36.

Additionally, the number of webs and grooves, as well as their position can be tailored to the number and geometry of the magnetic rings 38 of the second magnetic element 36. Another degree of freedom is given by the geometry of the webs and grooves, i.e. the depth and the width of the webs and grooves. Thus, the distribution of compressive stress upon thermal shrinkage at low temperatures can be tailored in order to avoid damage of the second magnetic element 36. Hence, the second magnetic element 36 can be tightly fit to the sleeve to avoid excessive hoop stress under operation without the risk of damage of the second magnetic element 36 during non-operation in harsh environments with low temperatures.

Further, the sleeve 40 comprises a rim 52 at the axial end of the sleeve, in particular towards the end of the rotor. The second magnetic element 36 directly abuts the rim 52, thereby defining the axial position of the second magnetic element 36.

Preferably, the bearing towards lower pressures at the inlet side of the vacuum pump is built as permanent magnetic bearing in accordance to the present invention. However, also the second bearing 26 can be built as magnetic bearing and preferably as permanent magnetic bearing in the same manner as described before.

## Claims

1. Vacuum pump, in particular turbomolecular vacuum pump, comprising
a stator,
a rotor (16) having at least one rotor element rotatable relatively to the stator
wherein the rotor is supported by at least one permanent magnetic bearing (24) having a first magnetic element (32) connected to the stator and a second magnetic element (36) connected to the rotor,
wherein the second magnetic element is connected to the rotor by a sleeve (40) having a radial inner side in direct contact with the second magnetic element and a radial outer side (44) towards the rotor,
**characterized in that**
the outer side (44) comprises at least one groove (48) and/or at least one web (46),
wherein the second magnetic element is fixed to the sleeve by an interference fit and the sleeve is fixed to the rotor by an interference fit.

2. Vacuum pump according to claim 1, **characterized in that** the sleeve (40) is configured to provide a lower radial expansion during temperatures of operation than the surrounding rotor elements to fixedly hold the second magnetic element (36) during operation, wherein during non-operation at lower temperatures than during operation it exerts a compressive stress to the second magnetic element below the breaking point of the second magnetic element.

3. Vacuum pump according to claim 1 or 2, **characterized by** a plurality of said grooves (48) and/or a plurality of said webs (46).

4. Vacuum pump according to any of claims 1 to 3, **characterized in that** at least one, preferably all, groove(s) (48) and/or web(s) (46), are along the circumferential direction of the sleeve.

5. Vacuum pump according to any of claims 1 to 4, **characterized in that** the sleeve (40) is made from a material with a low thermal expansion, in particular, the thermal expansion of the sleeve is below 23*10-6 K⁻¹ for Aluminium, preferably below 13*10-6 K-1 for Stainless Steel more preferably below 8*10-6 K⁻¹ for Neodymium, and most preferably below 1*10-6 K⁻¹ for Titanium.

6. Vacuum pump according to any of claims 1 to 5, characterized that at least one of the width or depth of all grooves (48) are identical and/or at least one of the width or depth of all webs (46) are identical and in particular at least one of the width or depth of the grooves and webs are identical.

7. Vacuum pump according to any of claims 1 to 5, characterized that at least one of the width or depth of all grooves (48) are different to each other and/or at least one of the width or depth of all webs (46) are different to each other and in particular at least one of the width or depth of the grooves are different to at least one of the width or depth of the webs.

8. Vacuum pump according to any of claims 1 to 7, **characterized in that** the second magnetic element (36) comprises more than one magnetic ring (38) surrounded by the sleeve (40).

9. Vacuum pump according to claim 8, **characterized in that** the axial position of the groove (48) and/or web (46) is adjusted to the position of the magnetic rings (38).

10. Vacuum pump according to claim 8 or 9, **characterized in that** the number of grooves (48) and/or webs (46) is adjusted to the number of magnetic rings (38).

11. Vacuum pump according to any of claims 1 to 10, **characterized in that** the sleeve (40) comprises a rim (52) at the inner side of the sleeve towards the end of the rotor, wherein the second magnetic element (36) directly abuts against the rim.

12. Vacuum pump according to any of claims 1 to 11, **characterized in that** at a first axial end of the sleeve (40) a web (46) is arranged wherein at the opposite second end of the sleeve a groove (48) or no web is arranged, wherein preferably the first end is towards the end of the rotor.

13. Vacuum pump according to any of claims 1 to 12, characterized that the rotor (16) is supported by a second permanent magnetic bearing (26) having a first magnetic element connected to the stator and a second magnetic element connected to the rotor, wherein the second magnetic element is connected to the rotor by a second sleeve having a radial inner side in direct contact with the second magnetic element and a radial outer side towards the rotor, wherein the outer side comprises at least one groove and/or at least one web.

## Patentansprüche

1. Vakuumpumpe, insbesondere Turbomolekular-Vakuumpumpe, mit
einem Stator,
einem Rotor (16) mit mindestens einem relativ zum Stator drehbaren Rotorelement,
wobei der Rotor durch mindestens ein Permanentmagnetlager (24) gelagert ist, das ein mit dem Stator verbundenes erstes Magnetelement (32) und ein mit dem Rotor verbundenes zweites Magnetelement (36) aufweist,
wobei das zweite Magnetelement mit dem Rotor durch eine Hülse (40) verbunden ist, die eine radiale Innenseite in direktem Kontakt mit dem zweiten Magnetelement und eine radiale Außenseite (44) zum Rotor hin aufweist,
**dadurch gekennzeichnet, dass**
die Außenseite (44) mindestens eine Rille (48) und/oder mindestens einen Steg (46) aufweist,
wobei das zweite Magnetelement durch Presspassung an der Hülse befestigt ist und die Hülse durch Presspassung am Rotor befestigt ist.

2. Vakuumpumpe nach Anspruch 1, **dadurch gekennzeichnet, dass** die Hülse (40) so ausgebildet ist, dass sie bei Betriebstemperaturen eine geringere radiale Ausdehnung aufweist als die umgebenden Rotorelemente, um das zweite Magnetelement (36) während des Betriebs festzuhalten, wobei sie bei Nichtbetrieb bei niedrigeren Temperaturen als während des Betriebs eine Druckspannung unterhalb des Bruchpunkts des zweiten Magnetelements auf das zweite Magnetelement ausübt.

3. Vakuumpumpe nach Anspruch 1 oder 2, **gekennzeichnet durch** eine Mehrzahl der Rillen (48) und/oder eine Mehrzahl der Stege (46).

4. Vakuumpumpe nach einem der Ansprüche 1 bis 3, **dadurch gekennzeichnet, dass** mindestens eine, bevorzugt alle, Rille(en) (48) und/oder Steg(e) (46) entlang der Umfangsrichtung der Hülse verlaufen.

5. Vakuumpumpe nach einem der Ansprüche 1 bis 4, **dadurch gekennzeichnet, dass** die Hülse (40) aus einem Material mit geringer thermischer Ausdehnung hergestellt ist, insbesondere liegt die thermische Ausdehnung der Hülse unter 23*10-6 K⁻¹ für Aluminium, bevorzugt unter 13*10-6 K-1 für rostfreien Stahl, weiter bevorzugt unter 8*10-6 K⁻¹ für Neodym und am meisten bevorzugt unter 1*10-6 K⁻¹ für Titan.

6. Vakuumpumpe nach einem der Ansprüche 1 bis 5, **dadurch gekennzeichnet, dass** mindestens entweder die Breite oder die Tiefe aller Rillen (48) identisch ist und/oder mindestens entweder die Breite oder die Tiefe aller Stege (46) identisch ist und insbesondere mindestens entweder die Breite oder die Tiefe der Rillen und Stege identisch ist.

7. Vakuumpumpe nach einem der Ansprüche 1 bis 5, **dadurch gekennzeichnet, dass** mindestens entweder die Breite oder die Tiefe aller Rillen (48) zueinander unterschiedlich ist und/oder mindestens entweder die Breite oder die Tiefe aller Stege (46) zueinander unterschiedlich ist und insbesondere mindestens entweder die Breite oder die Tiefe der Rillen zu mindestens entweder der Breite oder der Tiefe der Stege unterschiedlich ist.

8. Vakuumpumpe nach einem der Ansprüche 1 bis 7, **dadurch gekennzeichnet, dass** das zweite Magnetelement (36) mehr als einen von der Hülse (40) umgebenen Magnetring (38) aufweist.

9. Vakuumpumpe nach Anspruch 8, **dadurch gekennzeichnet, dass** die axiale Position der Rille (48) und/oder des Steges (46) auf die Position der Magnetringe (38) abgestimmt ist.

10. Vakuumpumpe nach Anspruch 8 oder 9, **dadurch gekennzeichnet, dass** die Anzahl der Rillen (48) und/oder Stege (46) an die Anzahl der Magnetringe (38) angepasst ist.

11. Vakuumpumpe nach einem der Ansprüche 1 bis 10, **dadurch gekennzeichnet, dass** die Hülse (40) einen Rand (52) an der Innenseite der Hülse zum Ende des Rotors hin aufweist, wobei das zweite Magnetelement (36) direkt an dem Rand anliegt.

12. Vakuumpumpe nach einem der Ansprüche 1 bis 11, **dadurch gekennzeichnet, dass** an einem ersten axialen Ende der Hülse (40) ein Steg (46) angeordnet ist, wobei am gegenüberliegenden zweiten Ende der Hülse eine Rille (48) oder kein Steg angeordnet ist, wobei bevorzugt das erste Ende zum Ende des Rotors hin liegt.

13. Vakuumpumpe nach einem der Ansprüche 1 bis 12, **dadurch gekennzeichnet, dass** der Rotor (16) durch ein zweites Permanentmagnetlager (26) gelagert ist, das ein mit dem Stator verbundenes erstes Magnetelement und ein mit dem Rotor verbundenes zweites Magnetelement aufweist, wobei das zweite Magnetelement mit dem Rotor durch eine zweite Hülse verbunden ist, die eine radiale Innenseite in direktem Kontakt mit dem zweiten Magnetelement und eine radiale Außenseite zum Rotor hin aufweist, wobei die Außenseite mindestens eine Rille und/oder mindestens einen Steg aufweist.

## Revendications

1. Pompe à vide, en particulier une pompe à vide turbomoléculaire, comprenant
un stator,
un rotor (16) ayant au moins un élément de rotor pouvant tourner par rapport au stator, dans laquelle le rotor est supporté par au moins un palier magnétique permanent (24) ayant un premier élément magnétique (32) relié au stator et un deuxième élément magnétique (36) relié au rotor,
dans laquelle le deuxième élément magnétique est relié au rotor par un manchon (40) ayant un côté intérieur radial en contact direct avec le deuxième élément magnétique et un côté extérieur radial (44) en regard du rotor,
**caractérisée en ce que**
le côté extérieur (44) comprend au moins une rainure (48) et/ou au moins une nervure (46),
dans laquelle le deuxième élément magnétique est fixé au manchon par un ajustement serré et le manchon est fixé au rotor par un ajustement serré.

2. Pompe à vide selon la revendication 1, **caractérisée en ce que** le manchon (40) est configuré pour fournir une dilatation radiale plus faible pendant des températures de fonctionnement que les éléments de rotor environnants pour maintenir fixement le deuxième élément magnétique (36) pendant le fonctionnement, dans laquelle pendant un non-fonctionnement à des températures plus basses que pendant le fonctionnement, il exerce une contrainte de compression sur le deuxième élément magnétique en dessous du point de rupture du deuxième élément magnétique.

3. Pompe à vide selon la revendication 1 ou 2, **caractérisée par** une pluralité desdites rainures (48) et/ou une pluralité desdites nervures (46).

4. Pompe à vide selon l'une quelconque des revendications 1 à 3, **caractérisée en ce qu'**au moins une des rainure(s) (48) et/ou nervure(s) (46), de préférence toutes, se trouvent le long de la direction circonférentielle du manchon.

5. Pompe à vide selon l'une quelconque des revendications 1 à 4, **caractérisée en ce que** le manchon (40) est constitué d'un matériau ayant une faible dilatation thermique, en particulier, la dilatation thermique du manchon est inférieure à 23^{∗}10⁻⁶ K⁻¹ pour l'aluminium, de préférence inférieure à 13^{∗}10⁻⁶ K⁻¹ pour l'acier inoxydable, plus préférentiellement inférieure à 8^{∗}10⁻⁶ K⁻¹ pour le néodyme, et le plus préférentiellement inférieure à 1^{∗}10⁻⁶ K⁻¹ pour le titane.

6. Pompe à vide selon l'une quelconque des revendications 1 à 5, **caractérisée en ce qu'**au moins une parmi la largeur ou la profondeur de toutes les rainures (48) est identique et/ou au moins une parmi la largeur ou la profondeur de toutes les nervures (46) est identique et en particulier au moins une parmi la largeur ou la profondeur des rainures et des nervures est identique.

7. Pompe à vide selon l'une quelconque des revendications 1 à 5, **caractérisée en ce qu'**au moins les largeurs ou les profondeurs de toutes les rainures (48) sont différentes les unes des autres et/ou au moins les largeurs ou les profondeurs de toutes les nervures (46) sont différentes les unes des autres et en particulier au moins une parmi la largeur ou la profondeur des rainures est différente d'au moins une parmi la largeur ou la profondeur des nervures.

8. Pompe à vide selon l'une quelconque des revendications 1 à 7, **caractérisée en ce que** le deuxième élément magnétique (36) comprend plus d'un anneau magnétique (38) entouré par le manchon (40).

9. Pompe à vide selon la revendication 8, **caractérisée en ce que** la position axiale de la rainure (48) et/ou de la nervure (46) est ajustée sur la position des anneaux magnétiques (38).

10. Pompe à vide selon la revendication 8 ou 9, **caractérisée en ce que** le nombre de rainures (48) et/ou de nervures (46) est ajusté au nombre d'anneaux magnétiques (38).

11. Pompe à vide selon l'une quelconque des revendications 1 à 10, **caractérisée en ce que** le manchon (40) comprend un rebord (52) sur le côté intérieur du manchon en regard de l'extrémité du rotor, dans laquelle
le deuxième élément magnétique (36) vient directement buter contre le rebord.

12. Pompe à vide selon l'une quelconque des revendications 1 à 11, **caractérisée en ce qu'**au niveau d'une première extrémité axiale du manchon (40), une nervure (46) est agencée, dans laquelle, au niveau de la deuxième extrémité opposée du manchon, une rainure (48) est disposée ou aucune nervure n'est disposée, dans laquelle la première extrémité est de préférence en regard de l'extrémité du rotor.

13. Pompe à vide selon l'une quelconque des revendications 1 à 12, **caractérisée en ce que** le rotor (16) est supporté par un deuxième palier magnétique permanent (26) ayant un premier élément magnétique relié au stator et un deuxième élément magnétique relié au rotor, dans laquelle le deuxième élément magnétique est relié au rotor par un deuxième manchon ayant un côté intérieur radial en contact direct avec le deuxième élément magnétique et un côté extérieur radial en regard du rotor, dans laquelle le côté extérieur comprend au moins une rainure et/ou au moins une nervure.
